# EUROPEAN PATENT SPECIFICATION

(11) **EP 0 618 988 B1**
(45) Date of publication and mention of the grant of the patent: **17.12.1997**
(21) Application number: 92918628.6
(22) Date of filing: 04.09.1992
(51) Int. Cl.: E03D 1/34, F16K 21/04

(54) **A FLUID DISCHARGE VALVE**
FLÜSSIGKEITSDURCHFLUSSVENTIL
SOUPAPE DE DECHARGE POUR FLUIDES

(30) Priority: 06.09.1991 GB 9119088
(43) Date of publication of application: 12.10.1994
(73) Proprietor: POLYPIPE PLC, Edlington, Doncaster, Yorkshire DN12 1ES (GB)
(72) Inventor: Frost, Douglas Robert David, Tyseley, Birmingham B11 2EB (GB)
(74) Representative: Johnson, Terence Leslie
(86) International application number: GB9201623
(87) International publication number: WO9305247

(56) References cited:
- AU-A- 9 187 482
- US-A- 2 993 676
- US-A- 3 055 630
- US-A- 4 179 096

## Description

This invention relates to fluid discharge valves similar to that disclosed in US-A-2,993,676, which is primarily intended to provide a light action, easily operable, fast flowing valve for emptying cisterns or other types of liquid storage containers or tanks. It is particularly, although not exclusively, applicable to being used flushing domestic toilets or w.cs.

Flushing toilet pans or bowls have been established for a great many years and the w.c. in one form or another is commonplace in every modern home. With the conventional modern low flush toilet cistern, the arrangement for achieving the flush basically consists of an inverted U tube or siphon with sides of unequal length configured such that the longer side of the U tube extends downwards through the bottom of the cistern, into which it is fixed by a bulkhead fitting. It is then connected to the toilet pan either directly or by a short length of pipe. At the end of the shorter side, there is an enlarged inverted bucket-shaped section, the larger open end of which lies close to the bottom inside the cistern. This enlarged section contains a plunger with a non-return valve, and on operation of a lever or handle on the outside of the cistern, the plunger moves inside the enlarged section forcing water over the bend of the inverted U tube and into the outlet pipe. This, when filled, creates a siphonic action for maintaining the flush until the cistern is empty.

Flushing devices can, however, vary considerably in performance and the majority do not operate satisfactorily below a medium water level setting. Most w.c.s require quite a lot of water to produce an effective flush, they can be slow to discharge and, in some cases, their efficiency can be significantly impaired by small reductions in the set water level in the cistern.

There are also flush operating devices which, particularly at certain water level settings, demand substantial effort and speed of actuation. This precludes operation by certain disabled persons, some old people and most young children.

According to the present invention there is provided a discharge valve device for total immersion in a fluid, the device comprising a housing, an upwardly movable main valve assembly within the housing and forming with the upper part thereof a variable volume upper chamber, a restricted passage between the upper chamber and the exterior thereof, an outlet leading down from the lower part of the housing, a seat for the main valve assembly at the entry to the outlet so that normally, in the lowered position of the main valve assembly, the outlet is blocked against ingress of fluid in which the device is immersed, and a pilot valve actuable remotely from the housing to put the upper chamber in free communication with the outlet, the arrangement being such that, on such free communication being established, fluid escapes the upper chamber and the change in relative pressures above and below the main valve assembly causes the latter to unseat thereby permitting flow of the immersing fluid into the outlet and its substantially complete discharge, such that cessation of flow of the immersing fluid allows the main valve assembly to revert to its seated position with the pilot valve cutting off said free communication, and such that, on replenishment, the immersing fluid penetrates the upper chamber via said restricted passage to create a nett downward pressure on the main valve assembly and thereby keep it seated.

In most preferred forms, said free communication is via a passage through the main valve assembly. The pilot valve may then have a member which co-operates with said passage to open or close it as said member is moved. The pilot valve member may be moved downwards or upwards or in either direction to open said passage. When upwards movement opens the passage, control means for the pilot valve member can carry a stop, and a float can be captively guided to engage the stop and actuate the pilot when the liquid level exceeds the predetermined limit.

In an alternative arrangement, the pilot valve governs a passage through the housing from the upper chamber to the outlet. The main valve assembly may then carry a secondary valve which, when the main valve assembly is raised, meets an abutment which causes that secondary valve to unseat and thereby provide more direct communication between the upper chamber and the outlet than the pilot valve passage.

The restricted passage can be provided by at least one aperture in the upper part of the housing, and or by at least one port in the main valve assembly.

In many preferred forms a flexible diaphragm interconnects the main valve assembly and the housing to form part of the bottom of the upper chamber. In that case the restricted passage can include at least one port in the diaphragm.

Alternatively the main valve assembly can form a piston which co-operates closely with the inside wall of the housing.

The main valve assembly will generally be denser than the fluid in which it is intended to be immersed, and will thus seat, by gravity . But a spring may act between the housing and the main valve assembly to assist that seating.

The contours of the underside of the main valve assembly, the lower part of the housing and outlet are conveniently shaped to channel the liquid flow, once the assembly is unseated, to promote lift of that assembly. Such contours can also be shaped to create a progressive pressure drop in the liquid and, with communication between the upper chamber and a low pressure zone so created, liquid in the upper chamber is scavenged and discharged with the main flow. This communication may be via the passage in the valve means or via the port therein.

The refilling of the vessel in which the device is fitted can be carried out by any means. It does not form part of this invention.

The device is described and claimed, for convenience, in terms of a particular orientation, the discharge being downwards. For the w.c. cistern, this will generally be the most suitable. But it should be understood that it could assume other attitudes, and even be invented. Obviously, the gravity operation of certain parts would no longer hold good and more springs, or at lest more powerful ones, would have to be used.

It is also generally described in connection with liquid discharge. But there is no inherent reason why the principles should not be applied to gas discharge.

For a better understanding of the invention, some embodiments will now be described, by way of example, with reference to the accompanying drawings, in which:

Figures 1, 2 and 4 to 7 and 11 to 15 are vertical sections of different valve discharge devices, and

Figures 3, 8, 9 and 10 are vertical sections of parts of other valve discharge devices.

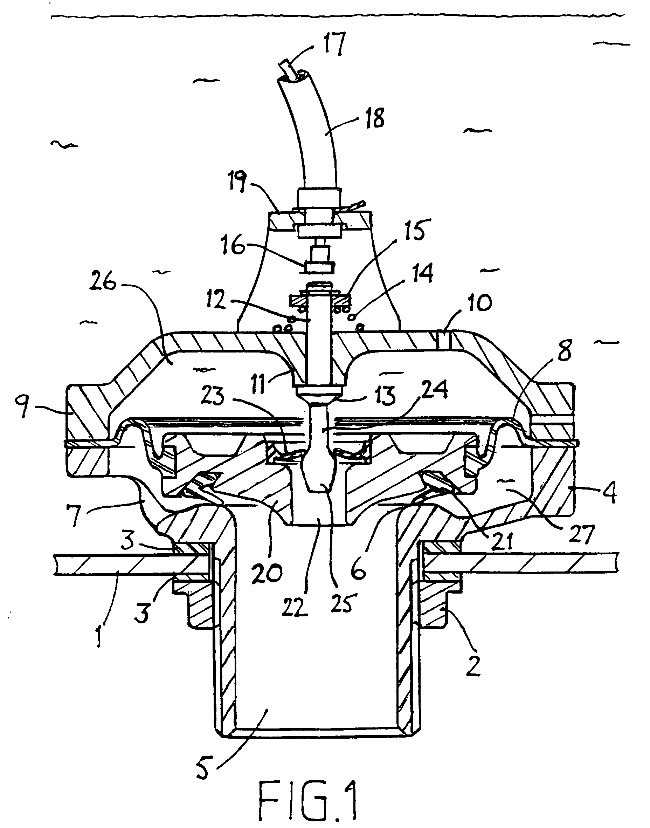

The discharge device of Figure 1 is mounted in the bottom of a cistern 1 and projects downwardly through it, the aperture being sealed by a nut 2 compressing washers 3. Its housing is generally mushroom shaped and its principal components include a lower body 4 with a hollow stem 5 which provides an outlet pipe and, externally, screw threading to receive the nut 2. Above the stem 5 it widens out into a shallow basin-like formation with a smooth, upwardly facing annular shoulder 6 at the transition and, radially beyond that, open ports 7, only one of which is shown.

A washer-like diaphragm 8 is clamped between the upper rim of the body 4 and a cover 9 in the form of a shallow inverted dish. This has sundry small holes 10 drilled through it, one being shown at the rim and another through the top, and at its centre it provides a boss 11 for the vertical guidance of a pilot valve stem 12, whose upward movement is limited by a shoulder 13. The valve stem 12 is urged upwardly by a surrounding coil spring 14 acting between the cover 9 and a trapped washer 15 on the stem, and it can be pressed downwardly by a pusher 16 at the end of a control cable 17. The flexible casing 18 for this cable has its lower end fixed to a bracket 19 mounted on the cover 9, while its upper end (not shown) leads to a lightly sprung push button, for example, outside the cistern.

At its inner rim the diaphragm is thickened to seat in the outer circumference of a main valve plate 20 co-axial with the body 4 and cover 9. On its underside, the plate 20 has an annular groove to receive a ring seal 21 whose flange bears on the shoulder 6. This constitutes the main valve. Centrally, the plate 20 has a through passage 22 counter-bored at its upper end to seat another ring seal 23 whose inwardly projecting flange embraces a downward extension 24 of the valve stem 12. This terminates in a bulb 25 and in the pre-operation position shown, the seal 23 co-operates with the upper shoulder of this bulb 25. The seal 23 and parts 24 and 25 constitute the pilot valve which initially blocks communication between the upper chamber 26, above the diaphragm 8 and valve 20, and the outlet pipe 5, while at this stage there is also no communication past the seal 21 between the annular chamber 27 below the diaphragm 8 and the outlet pipe 5. But initially, by virtue of the ports 7 and holes 10, the chambers 26 and 27 are full of water from the surrounding main body of water in the cistern.

When the button at the end of the flexible cable control is pressed, the pusher 16 engages the pilot valve stem 12 causing it to be pushed downwards and the bulb 25 to separate from the pilot seal 23. This allows water to escape from inside the upper chamber 26 into the passage 22 in the valve plate 20 and thence into the hitherto empty outlet pipe 5. This immediately creates a pressure drop in the chamber 26, producing a differential pressure almost equivalent to the head of water in the cistern 1 and a nett upward force causing the valve plate 20 and diaphragm 8 to move upwards. This creates a substantial opening of the main valve at 6,21 and it also causes the opening of the pilot valve 23,24,25 to increase. Water from the cistern 1 enters the ports 7 and quickly flows through the wide gap formed at the main valve seat 6 and into the outlet pipe 5, causing it to fill and provide the flow of water for flushing. The holes 10 are too small to replenish immediately the water escaping the chamber 26.

Once the flow has been initiated, it will continue independently of any further operation of the pilot valve, and the flow and flush action will be maintained until the cistern is virtually empty.

The fluid flow over the underside profile of the valve plate 20 generates a suction effect at the lower end of the passage 22. With the large gap between the pilot valve seal 23 and the bulb 25, this ensures that water entering the upper chamber 26 through the holes 10 is readily sucked through that gap keeping the upper chamber 26 scavenged. The pressure imbalance is thus maintained and with it the discharge flow.

When the cistern is empty the valve plate 20 returns under its own weight, although it could be spring assisted, to the initial position with its main seal 21 seated on the shoulder 6. The pilot valve also reseals and water drains from the outlet pipe 5, being replaced by air.

With the valve reset, the cistern starts to refill and as the level rises water enters through the holes 10 to refill the chamber 26 and thus equalise the pressure on both sides of the valve plate 20 and diaphragm 8. But, because of the larger area subject to water pressure on top of the main valve plate and diaphragm, there will be a nett downward force acting to keep the main valve seated.

Even with water just above the cover 9, the device can be made to discharge. With this capability the water level can be set so as to provide an effective flush using the minimum quantity of water.

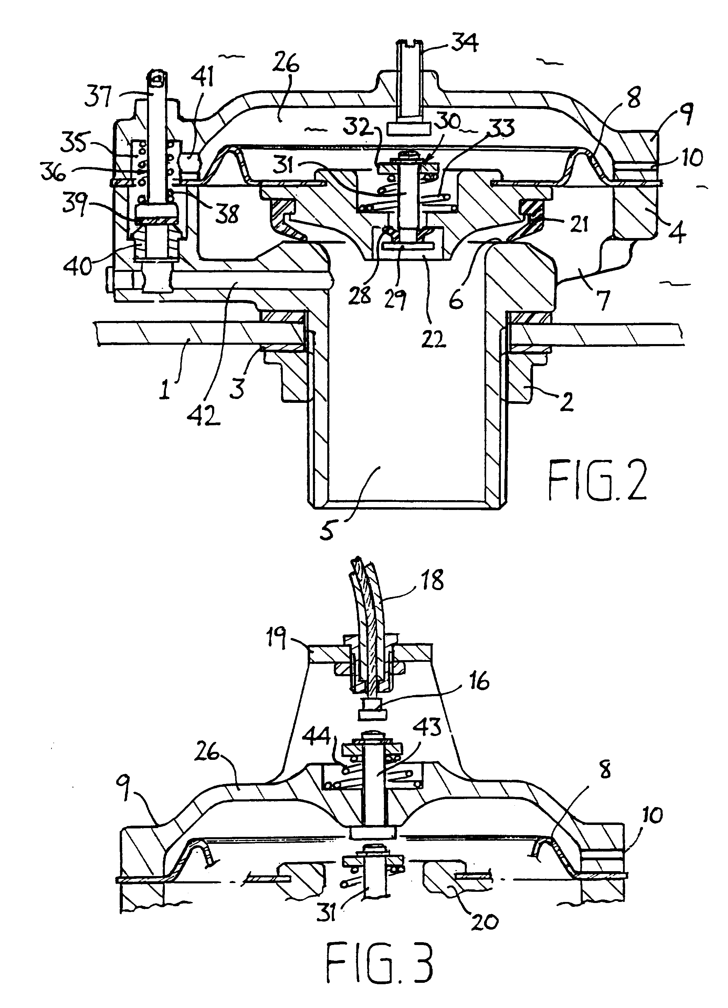

In Figure 2 the main valve is similar, but the pilot valve arrangement is different. The passage 22 through the valve plate 20 is counterbored at both ends, the downwardly facing shoulder providing a seat for a seal 28 'below' the head 29 of a secondary valve member 30. The stem 31 of this member passes freely up through this passage and a coil spring 32 located in the upper counterbore and acting against a captive washer 33 urges the secondary valve closed. An adjustable stop limiting upward movement of the secondary valve member is provided by a set screw 34 in the centre of the cover 9, whose lower end can be abutted by the top of the stem 31.

At one side of the assembly the pilot valve itself is housed in a chamber 35 formed by extensions of the main body 4 and cover 9. The valve member 36 has a vertically guided stem 37 and is urged downwardly by a coil spring 38 for its head 39 to engage a seat formed by the top of a short tubular insert 40. There is a port 41 providing communication between the chambers 26 and 35, and the insert 40 opens into a passage 42 leading to the outlet pipe 5. The exposed upper end of the stem 37 is connected to a pull device (not shown) which initiates operation.

When the pilot valve is raised, water in the chamber 26 can flow via port 41, chamber 35, insert 40 and passage 42 into the outlet pipe 5. This creates a differential pressure, as in Figure 1. The valve plate 20 unseats from the shoulder 6 and rises, bringing the stem 31 of the secondary valve into contact with the set screw 34. Further rising of the plate 20 opens the secondary valve and so flow can occur directly between the chamber 26 and the outlet pipe 5 via the passage 22. This keeps the chamber 26 scavenged, and thus flow through the valve maintained, with release of the pilot valve having no effect.

Figure 3 combines features of Figures 1 and 2. The secondary valve in the plate 20 now becomes the pilot valve as well, the set screw 34 being replaced by a plunger 43 urged upwardly by a coil spring 44 and being depressible by the cable controlled pusher 16. The operation is similar, and once flow has started with the plate 20 raised and the remote control released, the pilot valve is kept open by its upper end abutting the lower end of the plunger 43, which will have reverted to the position shown.

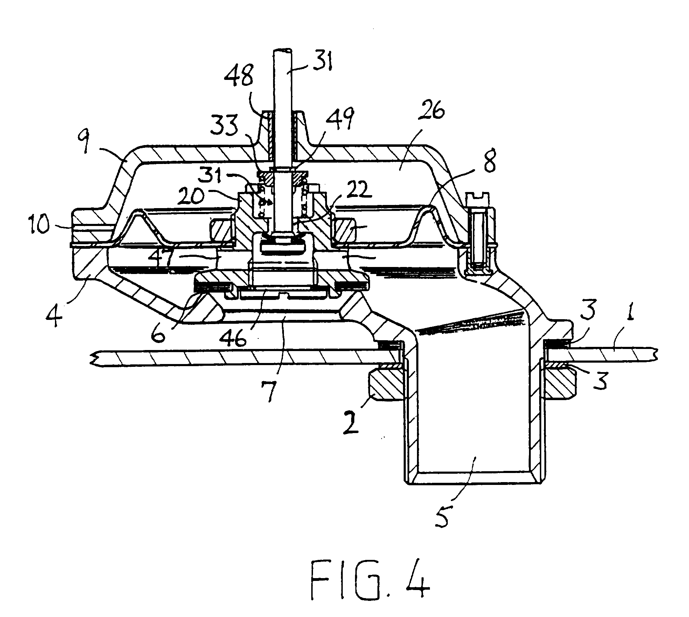

In Figure 4, the assembly is asymmetrical, with the outlet pipe 5 well offset to one side and one large port 7 on the underside of the basin-like formation of the body 4. The valve plate 20 has shrunk radially and grown axially to become a stepped cylindrical block with a castellated upper end and, the diaphragm is clamped to this block by a screw ring 45. The central through passage 22 is plugged at the bottom by a screw 46 and there are radial ports 47 leading from it. The pilot valve 30 is similar to that of Figure 3 but its stem 31 is carried through a bush 48 at the centre of the cover 9 and is directly actuated by a remote control. A circlip 49 on this stem which retains the washer 33 will engage the bottom end of the bush 48 when the valve 30 is raised by the block 20 and limit its upward movement.

Depression of the pilot valve opens the chamber 26 to the outlet pipe 5 via passage 22 and ports 47. This is limited by the washer 33 engaging the castellated upper end of the block, which ensures that flow is not cut off. The block 20 is raised, as before, and the seal 21 separates from the shoulder 6 to permit full flow. The pilot valve 30 remains unseated as the block 20 is raised further than the stem 31 can travel upwards.

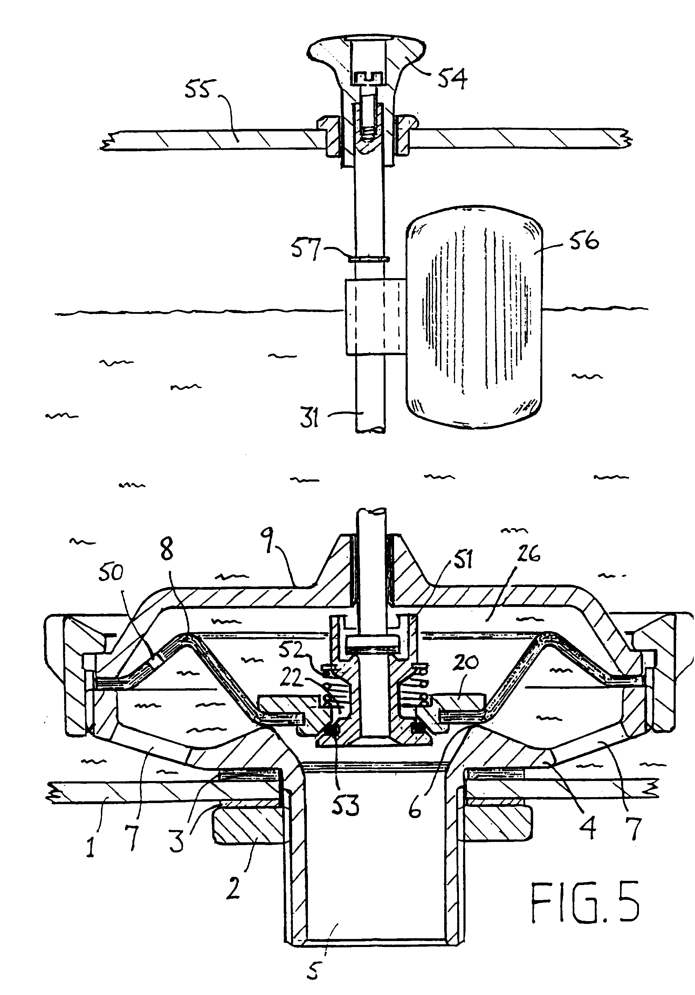

In Figure 5, the inner circumferential portion of the diaphragm 8 provides the annular seal 21, and instead of one or more holes 10 in the cover 9, the diaphragm 8 has at least one small hole 50. The pilot valve member 30 seats by seal 23 within the cup of a hollow-stemmed goblet-shaped member 51 urged upwards from the plate 20 by a spring 52. The frusto-conical base of the member 51 has a ring seal 53 which seats against the coned lower mouth of the passage 22.

The pilot valve 30 is operated by a knob 54 mounted in the cover 55 of the cistern and the elongate vertical stem 31 optionally carries a sliding float 56 whose upper limit is defined by a circlip stop 57.

When the knob 54 is pulled up, water in the chamber 26 can pass the seal 23 and flow down through the member 51 into the outlet pipe 5. As with previous embodiments, the plate 20 and diaphragm 8 rise, permitting full flow via ports 7 and over the shoulder 6. The member 51 is carried with the plate 20 until its upper rim abuts the underside of the cover 9, whereupon the spring 52 compresses and the passage 22 is opened past the seal 53, compensating for the closure of the pilot valve 30 at the seal 23 when the knob 54 is released. The slow replenishment of the upper chamber 26 is up through the hole(s) 50 in the diaphragm.

Operation can equally well be achieved by pushing the knob 54 down, which directly unseats the seal 53 from the coned lower mouth of the passage 22 and allows the chamber 26 to discharge.

The float 56 could generate automatic repeated flushing if the stop 57 were lower. But in this example, the stop is set so that it is not engaged when the cistern is filled to its normal maximum. But if that is exceeded, the float will slide up the stem 31 and lift the pilot valve 30 by the stop 57, causing the cistern to discharge. It is thus a safety measure.

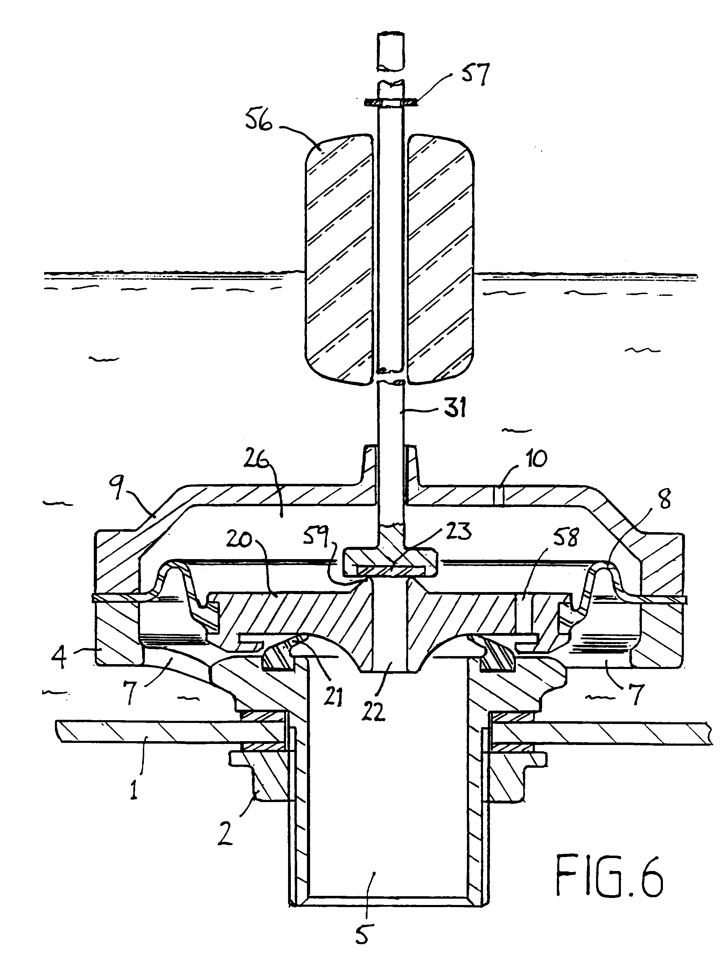

In Figure 6 the seal 21 is fitted in an annular groove in the shoulder 6 and its flange co-operates with the underside of the valve plate 20. This has a further port 58 additional to the central passage 22 but radially beyond the seal 21. The direct lift pilot valve member 30 carries the seal 23 which normally engages a lip 59 around the upper end of the passage 22, and its stem 31 is fitted with a safety float 56, as in Figure 5.

In Figure 6, the valve is shown in the non-operated condition with the main valve plate 20 seated on the seal 21 and the pilot valve seated on the lip 59. The pilot valve adopts the closed position by gravity, but this can be assisted by a spring.

The initiation of flow is similar to previous embodiments, but its maintenance relies mainly on the underneath profile of the main valve plate 20 and the seal 21, the change in direction of flow engendered by it, and the venturi or suction effect of deflecting flow away from the port 58 and thus maintaining the upper chamber space 26 evacuated.

After the valves have been operated and the liquid has flowed through ports 7 across the main seal 21 into the outlet pipe 5 and the water level has dropped down to the main valve seat level, the valves will close allowing refilling to commence. Water enters ports 7 and fills underneath the main valve plate 20 and diaphragm 8 before entering the chamber 26 first via the port 58 but later through hole(s) 10 as well. Whilst the level is below the port 58, the main valve remains seated under the action of a resilient force in the diaphragm, the weight of the pilot valve, and its own weight, the plate 20 being denser than water.

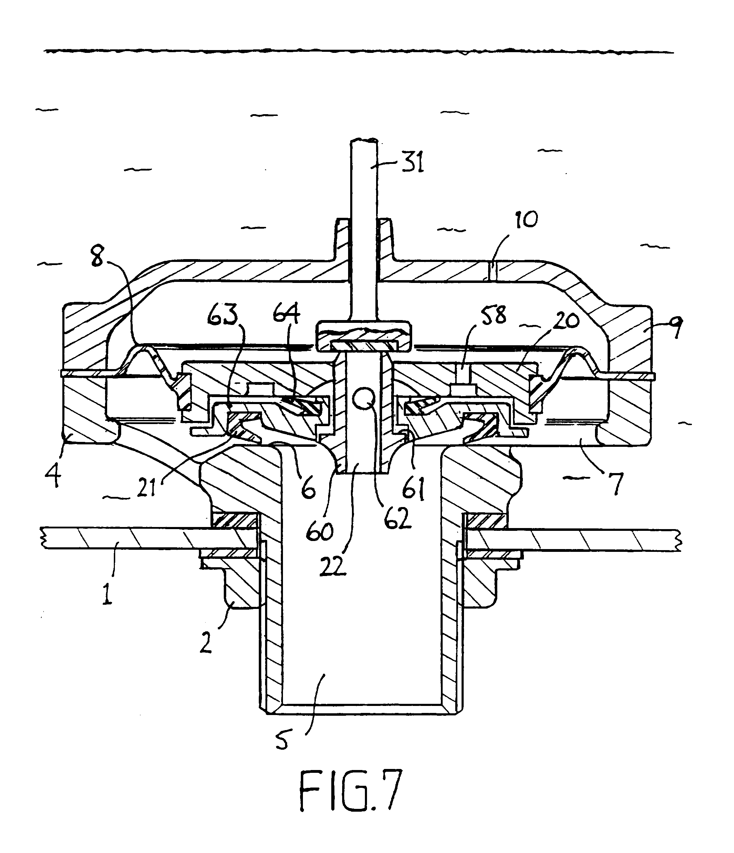

In Figure 7, the pilot valve is similar to that of Figure 6, the lip 59 being provided by a tubular insert 60 whose lower end is externally enlarged to form an upwardly facing shoulder 61. At an intermediate point, the insert has a port 62 opening to the underside of the plate 20. The shoulder 61 holds loosely captive a secondary valve plate 63 with an annular seal 64 on its upper side, near its inner circumference, which co-operates with the main plate 20. The port 58 is radially beyond this seal. On the underside, at a greater radius, the plate 63 carries the seal 21.

The raising of the pilot valve substantially empties the chamber 26 through the passage 22, as before, and the main valve plate 20 rises. But the secondary valve plate 63 remains briefly seated until caught up by the lost motion connection between itself and the shoulder 61. Full discharge commences, and although the upper end of the passage 22 is re-closed, a passage to maintain evacuation of the chamber 26 is opened up via the port 58, past the seal 64 and through the port 62. Thus the pressure differential is maintained by the suction generated at the lower end of the insert 60. The underside profile of the plate 63 and the insert 60 also contribute, by changing the direction of flow, to the retaining open of the main valves.

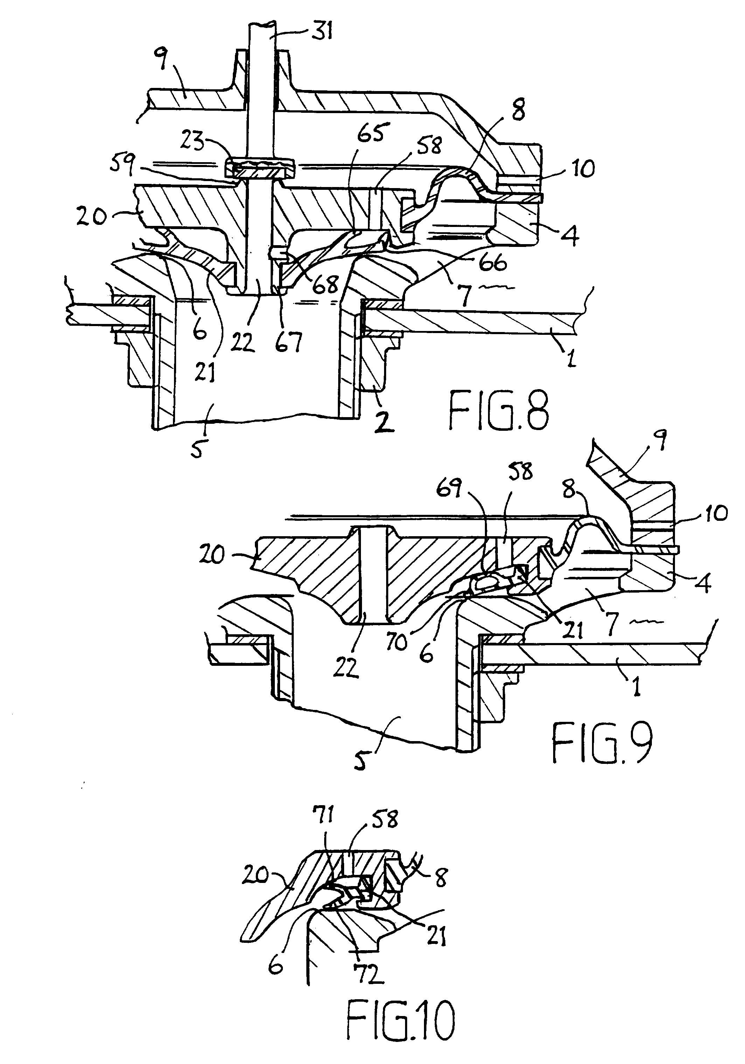

Figure 8 shows a further variation. The main seal 21 is of more complex shape, having the form of a dished washer with an upwardly open channel around its outer circumference defined by two annular flanges 65 and 66. The port 58 opens into this channel, the flanges engaging the underside of the valve plate 20 on either side. The inner rim of the seal 21 is located in a groove in a spigot 67 projecting down from the plate 20 and a port 68 in this spigot opens the passage 22 to the upper side of the seal 21.

In Figure 9, the seal 21 is seated in an inwardly facing groove near the periphery of the valve plate 20. Again it forms a channel into which the port 58 opens, and radially inwards of this a tubular portion 69 with a lip 70 co-operate respectively with the underside of the plate 20 and the shoulder 6.

This configuration may be altered as shown in Figure 10, where the seal 21 bifurcates on its inner side into two flanges 71 and 72 respectively co-operating with the underside of the plate 20 and the shoulder 6.

The embodiments of Figures 8, 9 and 10 also primarily rely on underside profile, change in direction and flow deflection for maintaining the flow whilst the cistern empties. The sealing flanges or portions 65, 69 and 71 are freed from engagement with the valve plate 20 once that has lifted, so opening the port 58 to evacuate the upper chamber space 26. In Figure 8, the evacuation passage includes the port 68.

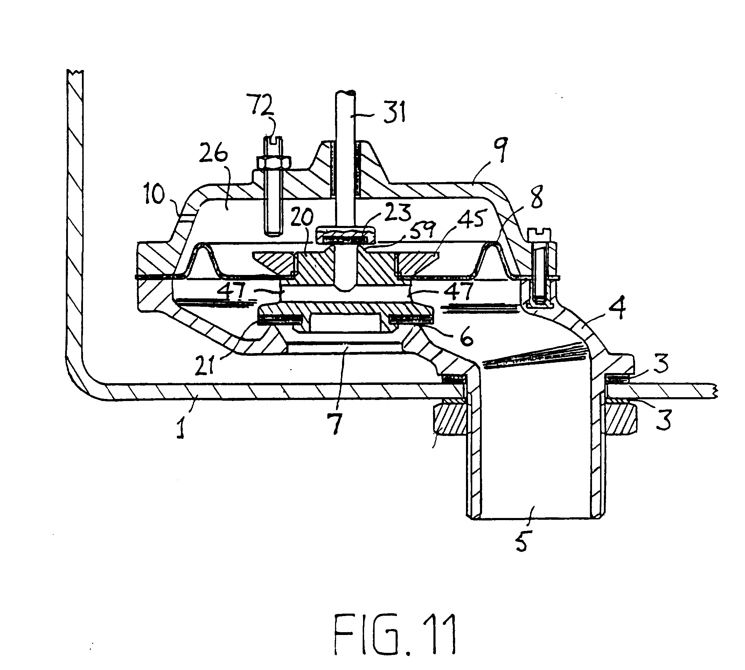

The valve assembly of Figure 11 resembles, in its lower half, that of Figure 4, while the pilot valve arrangement is that of Figures 6, 7 and 8. It has an adjustable screw stop 73 projecting down into the chamber 26 to limit locally the upward movement of the valve plate 20 and to cause it to tilt.

When the pilot valve is operated in the normal manner, the main valve opens and the main valve plate 20 rises and comes into contact with the stop 73. This causes the main valve plate and hence the pilot valve seat 59 to lie askew so that the seal 23 cannot seal properly. Thus during discharge water can escape over the rim 59 and semi-evacuate the upper chamber space 26 until the cistern is empty.

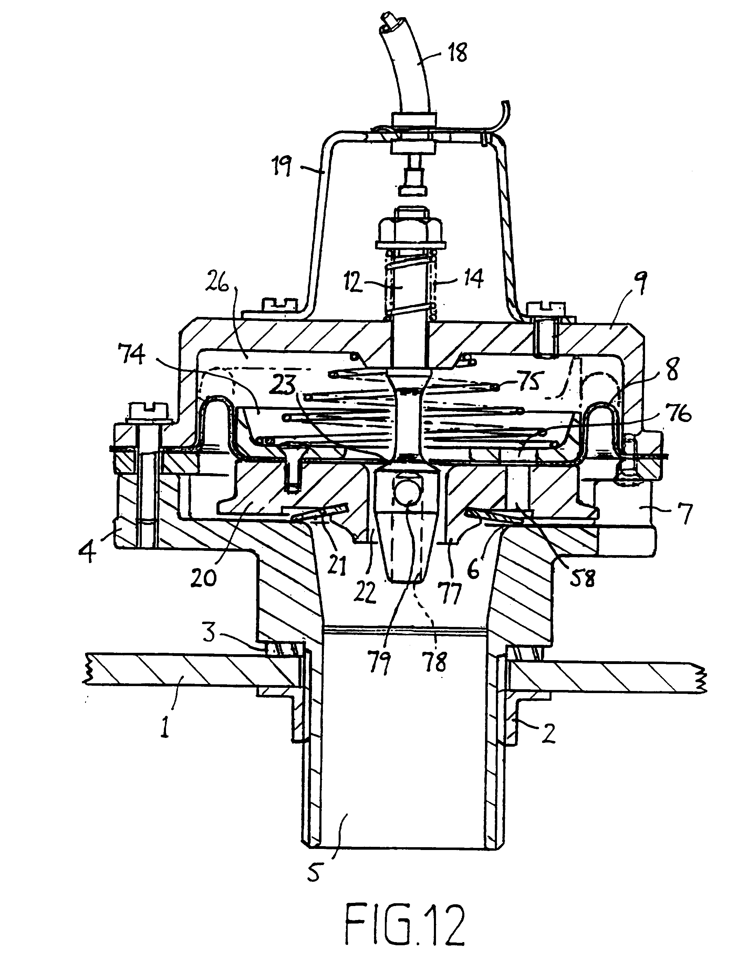

In Figure 12 the diaphragm 8 is clamped between the valve plate 20 and a cupped ring 74 and has a small central hole whose lip provides the seal 23. The pilot valve resembles that of Figure 1 and the seal 23 co-operates with the stepped transition between its stem and the nose 25. The cupped ring 74 locates the lower, wider end of a spiral spring 75 which reacts against the underside of the cover 9 to urge the main valve assembly downwards. The ring 74 has a port 76 which registers with the port 58 and the diaphragm 8 is also apertured at this area to provide communication between the upper and lower chambers 26 and 27. The main valve plate 20 has a downwardly projecting spigot 77 with a concave coned profile defining the lower end of the passage 22, and the bulb 25 of the pilot valve projects below it. This bulb has a blind co-axial bore 78 open at the lower end and with a port 79 at its upper end opening into the passage 22.

It will be noticed that there are no holes 10 in the cover 9 and that the only access to the chamber 26, other than the passage 22, is provided by the ports 58 and 76. These are situated low down, through the main valve assembly. This arrangement is to ensure that only the minimum of water enters the chamber 26 through the ports 58, 76 and that air is compressed in the top of the cover 9 so that when the pilot valve is operated, air and water can flow rapidly via the annular opening at the pilot valve seal 23. This also applies to Figure 5, where there is the hole 50 in the diaphragm, and to Figures 2, 3, 4 and 8 where the holes 10 in the cover are low down and there is no vent in the top if the pilot valve is a close sliding fit.

When not in operation (with the cistern filled with water) the valves of Figure 12 are held in the closed position with the main seal 21 positively seated on the shoulder 6 under the action of the hydrostatic force due to the water pressure acting on a larger area above the main valve member than below it. There are additional forces exerted by the spring 75, the diaphragm resilience and the weight of the main valve plate 20, but these are relatively small in comparison to the forces due to the head of water in the cistern.

The operation of the valve is initiated by pressing a device at the opposite, unseen end of the control cable 18. The resultant downward movement of the pilot valve opens a gap at the seal 23 and allows the pressurised air and water in the chamber 26 to escape via the passage 22.

This creates a hydrostatic imbalance with a nett upward force due to the pressure head of water acting on the annular area underneath the main valve plate 20 and diaphragm 8 radially outwards of the shoulder 6. This nett force causes the main valve to open, with the main valve assembly rising up into the cover 9 and providing a cylindrical opening.

With the valve in this open position, water enters the chamber 27 at the ports 7 around the outside of the lower body 4 and flows radially inwards below the main valve plate 20. The contoured spigot 77 and projecting bulb 25 deflect the flow down towards the entrance to the outlet pipe 5. The water undergoes a first stage pressure drop during this passage.

This change in direction of flow produces a nett upward force which helps to counteract the downward force created by the pressure drop between the main valve member and the plane surface level with the shoulder 6.

There is, in addition to the change in direction, a second stage pressure reduction which takes place due to the narrowing of the section between the tapered entrance to the outlet pipe 5 and the profile of the bulb 25 and the spigot 77. Beyond the narrowest point or throat (which is in the region of the end of the bulb 25) there is a further pressure drop due to a sudden enlargement of section. It is this partial vacuum pressure, which is fed back via the passage 22 to the upper chamber 26, that mainly keeps the valve in the open position for the duration of discharge.

In addition to providing the means of maintaining full flow through the valve, the contours of the pilot valve bulb 25, the spigot 77 and the entrance taper to the outlet pipe 5 are configured to minimise the effect of the 'vena contacta' and to achieve a high efficiency discharge by ejector type action.

The valve remains open until the water level in the cistern is almost down to the level of the shoulder 6. At this point the main valve assembly moves downwards under the action of its own weight and the small restoring forces of the spring 75 and the resilience of the diaphragm 8. During the early stages of refilling, these forces maintain the valve sealed until the pressure of water becomes the main means of keeping the valve closed.

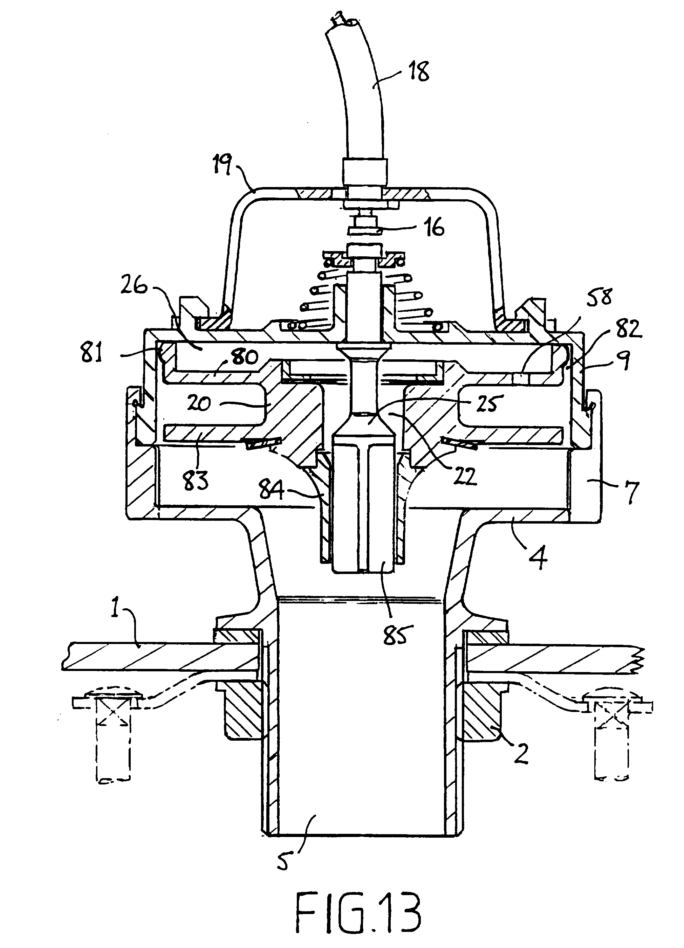

In Figure 13, the device has no flexible diaphragm. Instead, the main valve plate is thickened centrally and is provided with two annular flanges so that it resembles a pulley wheel with a very deep groove. The upper flange 80 (in which is the port 58) has an upturned rim 81 which lies close to the inner cylindrical wall of the cover 9, leaving a narrow annular gap or clearance 82. The upper edge of the rim 81 can abut the underside of the cover 9 when the valve is fully open. The lower flange 83 is of lesser diameter and the lower chamber 27 is largely constituted by the space between the flanges. The main valve member can be regarded as a piston 20.

The passage 22 is lengthened at its lower end by a screw-in extension 84, and the pilot valve is also extended below the bulb 25 by a fluted stem 85 which slides within the extension 84. The flutes allow free passage of air and water, while the extension 84 acts internally as a vertical guide, and externally performs the function of the spigot 77 of Figure 12.

Generally, the principle of operation of this device is similar to the previous ones. During refilling, water enters the upper chamber 26 via the port 58 and to a lesser degree via the clearance gap 82, and the main valve assembly 20, being denser than water, is maintained in the closed position during the early stages of refilling under its own weight. It could be made from a lighter, plastics material for example, but it would then be necessary to provide a restoring spring as in Figure 12.

On operating the pilot valve, air and a small amount of water escape from the chamber space 26, via the annular opening at the pilot seal 23, into the passage 22, through the spaces between the flutes in the lower pilot valve stem 85 into the extension 84, and thence to the outlet pipe 5. As before, this causes a hydrostatic imbalance and the piston 20 rapidly rises to the top of the cover 9, producing a wide cylindrical opening at the valve seal 21. The upper chamber 26 is kept scavenged as before by the partial vacuum at the end of the extension 84 and only a small amount of water can enter via the port 58. The gap 82 is now shut off by the rim 81 engaging the underside of the cover 9.

The three stage pressure drop occurs as with the diaphragm type of Figure 12, although the relative contours of the lower flange 81, the extension 84 and the tapered entrance to the outlet pipe 5 may give a marginally better performance.

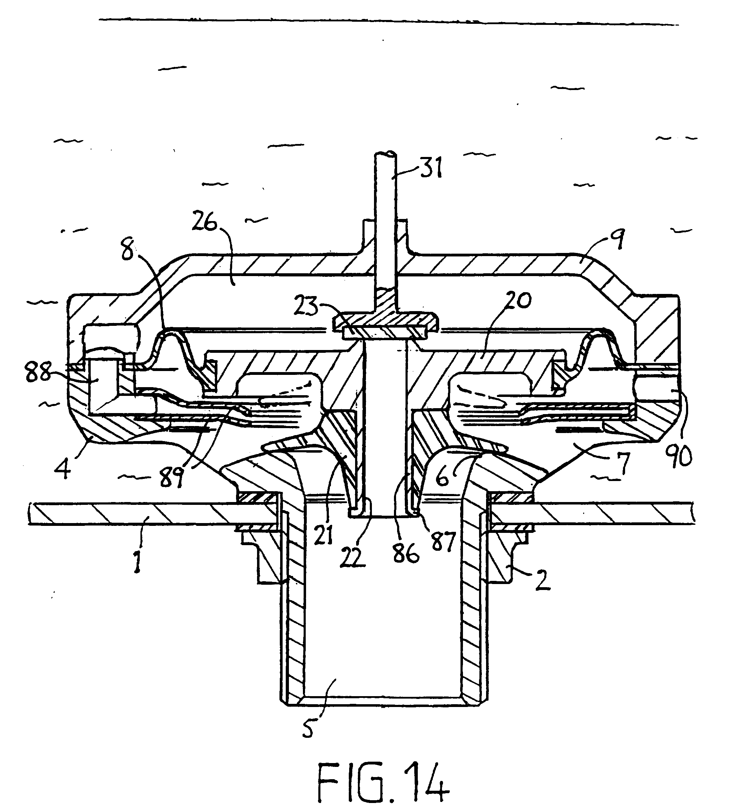

In Figure 14, the seal 21 is sleeved over a spigot 86 projecting down from the valve plate 20 and defining the lower part of the passage 22. It is retained by an out-turned lip 87 at the bottom, and it has a projecting annular flange that overlaps the shoulder 6. A side passage 88 leads through the housing from the upper chamber 26 to the lower chamber 27, bypassing the valve assembly, but the lower end opens into a narrow space between two co-axial washer-like plates 89 whose inner rims are slightly downturned and convergent, just outside the radial extent of the flange of the seal 21. At least one port 90 leads through the side wall of the lower part 4 above the plates 89. There are no ports in the cover 9.

The operation is initiated by lifting the valve member 31 and valve plate 20 follows, as before, initiating the discharge and re-closing the pilot valve. The only entry to the chamber 26 is then the restricted one through the gap between the plates 89 and the passage 88. The flange of the main seal 21 is in the dotted line position, just above that gap. The inflow of water through the ports 7 and 90 and the shape of the plates 89, particularly at their inner rims, create a suction effect keeping the chamber 26 scavenged via the passage 88, and the underside profile of the seal 21, reacting to the changing direction of flow helps to keep the valve assembly raised. The profiling is similar to that of Figures 12 and 13 and engenders the three stage pressure drop described above.

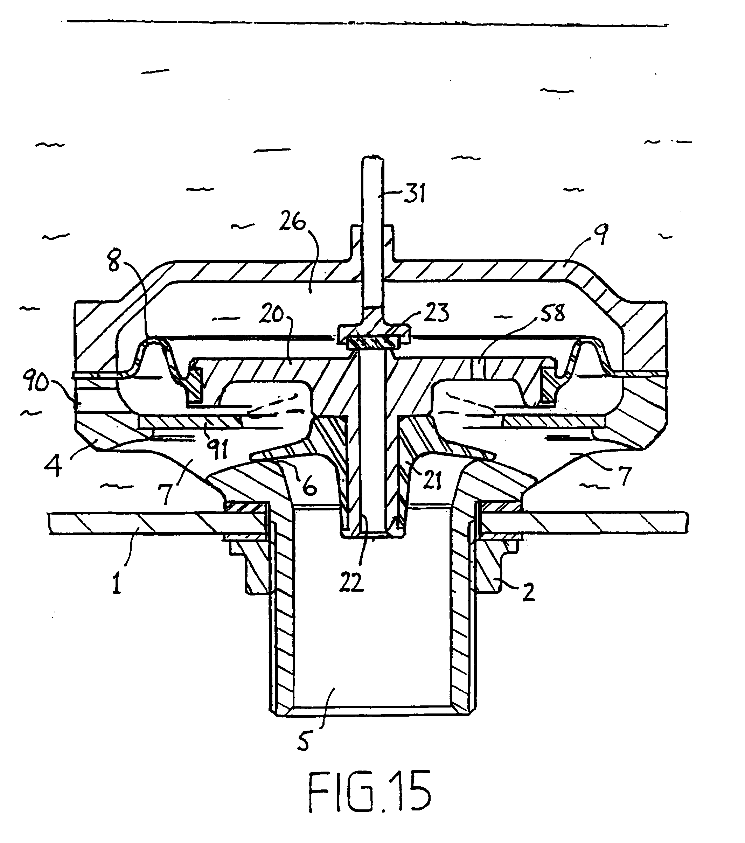

The valve assembly is the device of Figure 15 is very similar to that of Figure 14, but the port 58 is now restored, and there is no passage 88. Instead of the plates 89, there is a single deflection plate 91, in the same position and similarly dimensioned.

The device is operated as before, and the deflection plate 91 guides the inflowing water onto the underside of the profiled seal 21, producing lift. A reduced pressure area will be generated below the valve plate 20 so that there will be suction at the port 58 to keep the chamber 26 scavenged.

It will be understood that these are only some examples, and that features of any one may be incorporated in the other devices which are presently shown not the possess them.

It has been assumed that most components are, in plan, of circular profile. It will be understood that they could be non-circular - typically oval or rectangular. It is also conceivable that, instead of the main valve assembly being constrained axially, it could be hinged at one edge and open as a flap. But the principle of operation would be basically the same as described.

## Claims

1. A discharge valve device for total immersion in a fluid, the device comprising a housing (4,9), an upwardly movable main valve assembly (20) within the housing and forming with the upper part (9) thereof a variable volume upper chamber (26), a restricted passage (10,49,58,88) between the upper chamber (26) and the exterior thereof, an outlet (5) leading down from the lower part (4) of the housing, a seat (6) for the main valve assembly at the entry to the outlet (5) so that normally, in the lowered position of the main valve assembly, the outlet is blocked against ingress of fluid in which the device is immersed, and a pilot valve (12,30,36) actuable remotely from the housing (4,9) to put the upper chamber (26) in free communication with the outlet (5), the arrangement being such that, on such free communication being established, fluid escapes the upper chamber (26) and the change in relative pressures above and below the main valve assembly (20) causes the latter to unseat thereby permitting flow of the immersing fluid into the outlet and its substantially complete discharge, such that cessation of flow of the immersing fluid allows the main valve assembly (20) to revert to its seated position with the pilot valve (12,36) cutting off said free communication, and such that, on replenishment, the immersing fluid penetrates the upper chamber (26) via said restricted passage (10,49,58,88) to create a nett downward pressure on the main valve assembly and thereby keep it seated.

2. A device as claimed in Claim 1, wherein said free communication is via a passage (22) through the main valve assembly (20).

3. A device as claimed in Claim 2, wherein the pilot valve has a member (25,31) which co-operates with said passage (22) to open or close it as said member is moved.

4. A device as claimed in Claim 3, wherein said pilot valve member (25) is moved downwards to open said passage (22).

5. A device as claimed in Claim 3, wherein said pilot valve member (31) is moved upwards to open said passage.

6. A device as claimed in Claim 3, wherein said pilot valve member (31) opens said passage (22) when moved either up or down.

7. A device as claimed in Claim 5 or 6, for liquid, wherein control means for said pilot valve member carries a stop (57) and a float (56) captively guided to engage the stop and actuate the pilot valve when the liquid level exceeds a predetermined limit.

8. A device as claimed in Claim 1, wherein the pilot valve (36) governs a passage (41,35,40,42) through the housing from the upper chamber (26) to the outlet (5).

9. A device as claimed in Claim 8, wherein the main valve assembly (20) carries a secondary valve (30) which, when the main valve assembly is raised, meets an abutment (34) which causes that secondary valve (30) to unseat and thereby provide more direct communication between the upper chamber (26) and the outlet (5) than the pilot valve passage.

10. A device as claimed in any preceding Claim, wherein the restricted passage includes at least one aperture (10) in the upper part (9) of the housing.

11. A device as claimed in any preceding Claim, wherein the restricted passage includes at least one port (58) in the main valve assembly.

12. A device as claimed in any preceding Claim, wherein a flexible diaphragm (8) interconnects the main valve assembly (20) and the housing (4,9) to form part of the bottom of the upper chamber (26).

13. A device as claimed in Claim 12, wherein the restricted passage includes at least one port (50) in the diaphragm (8).

14. A device as claimed in any one of Claims 1 to 11, wherein the main valve assembly (20) forms a piston which co-operates closely with the inside wall of the housing (4,9).

15. A device as claimed in any preceding Claim, wherein the main valve assembly (20) is denser than the fluid in which it is intended to be immersed, and will thus seat by gravity.

16. A device as claimed in any preceding Claim, wherein a spring (75) acts between the housing (4,9) and the main valve assembly (20) to assist its seating.

17. A device as claimed in any preceding Claim, wherein the contours of the underside of the main valve assembly (20), the lower part of the housing (4) and outlet (5) channel the liquid flow, once the assembly (20) is unseated, to promote lift of that assembly (20).

18. A device as claimed in Claim 2 and any preceding Claim, wherein the contours of the underside of the main valve assembly (20), the lower part of the housing (4), and the outlet (5) channel the liquid flow, once the assembly (20) is unseated, to create a progressive pressure drop in the liquid, and wherein there is communication between the upper chamber and a low pressure zone so created, whereby liquid in the upper chamber is scavenged and discharged with the main_flow.

19. A device as claimed in Claim 18 as appendant to Claim 2, wherein the communication with the low pressure zone is via said passage (22).

20. A device as claimed in Claim 18 as appendant to Claim 11, wherein the communication with the low pressure zone is via said port (58).

## Patentansprüche

1. Ablaßventilvorrichtung für ein vollständiges Tauchen in einer Flüssigkeit, wobei die Vorrichtung aufweist: ein Gehäuse (4, 9), eine nach oben bewegliche Hauptventilbaugruppe (20) innerhalb des Gehäuses, die mit dessen oberen Teil (9) eine obere Kammer (26) mit veränderlichem Volumen bildet, einen begrenzten Durchgang (10, 49, 58, 88) zwischen der oberen Kammer (26) und deren Außenseite, eine Austrittsöffnung (5), die aus dem unteren Teil (4) des Gehäuses nach unten herausführt, eine Auflagefläche (6) für die Hauptventilbaugruppe am Eingang zur Austrittsöffnung (5), so daß in der abgesenkten Position der Hauptventilbaugruppe die Austrittsöffnung normalerweise gegen das Eindringen von Flüssigkeit, in der die Vorrichtung getaucht ist, abgesperrt ist, und ein Steuerventil (12, 30, 36), das vom Gehäuse (4, 9) entfernt betätigbar ist, um die obere Kammer (26) in eine freie Verbindung zur Austrittsöffnung (5) zu bringen, und wobei die Anordnung so ist, daß beim Bewirken einer derartigen freien Verbindung die Flüssigkeit aus der oberen Kammer (26) austritt und die Veränderung der relativen Drücke oberhalb und unterhalb der Hauptventilbaugruppe (20) dazu führt, daß letztere von der Auflagefläche entfernt wird, wodurch das Strömen der Tauchflüssigkeit in die Austrittsöffnung und ihr im wesentlichen vollständiges Ablassen gestattet werden, so daß das Aufhören des Strömens der Tauchflüssigkeit gestattet, daß die Hauptventilbaugruppe (20) in ihre Auflageposition zurückkehrt, wobei das Steuerventil (12, 36) die freie Verbindung unterbindet, und so, daß beim Nachfüllen die Tauchflüssigkeit in die obere Kammer (26) über den begrenzten Durchgang (10, 49, 58, 88) eindringt, um einen unmittelbar nach unten gerichteten Druck auf die Hauptventilbaugruppe zu erzeugen, und um sie dadurch auf ihrer Auflagefläche zu halten.

2. Vorrichtung nach Anspruch 1, bei der die freie Verbindung über einen Durchgang (22) durch die Hauptventilbaugruppe (20) erfolgt.

3. Vorrichtung nach Anspruch 2, bei der das Steuerventil ein Element (25, 31) aufweist, das mit dem Durchgang (22) zusammenwirkt, um ihn zu öffnen oder zu schließen, während das Element bewegt wird.

4. Vorrichtung nach Anspruch 3, bei der das Steuerventilelement (25) nach unten bewegt wird, um den Durchgang (22) zu öffnen.

5. Vorrichtung nach Anspruch 3, bei der das Steuerventilelement (31) nach oben bewegt wird, um den Durchgang zu öffnen.

6. Vorrichtung nach Anspruch 3, bei der das Steuerventilelement (31) den Durchgang (22) öffnet, wenn es entweder nach oben oder nach unten bewegt wird.

7. Vorrichtung nach Anspruch 5 oder 6 für eine Flüssigkeit, bei der die Steuereinrichtung für das Steuerventilelement einen Anschlag (57) und einen Schwimmer (56) trägt, der eingeschlossen geführt wird, um mit dem Anschlag in Eingriff zu kommen und das Steuerventil zu betätigen, wenn der Flüssigkeitspegel eine vorgeschriebene Grenze übersteigt.

8. Vorrichtung nach Anspruch 1, bei der das Steuerventil (36) einen Durchgang (41, 35, 40, 42) durch das Gehäuse von der oberen Kammer (26) zur Austrittsöffnung (5) steuert.

9. Vorrichtung nach Anspruch 8, bei der die Hauptventilbaugruppe (20) ein Sekundärventil (30) trägt, das, wenn die Hauptventilbaugruppe angehoben wird, auf ein Widerlager (34) trifft, das bewirkt, daß das Sekundärventil (30) von der Auflagefläche entfernt wird und dadurch eine direktere Verbindung zwischen der oberen Kammer (26) und der Austrittsöffnung (5) als der Steuerventildurchgang bereitstellt.

10. Vorrichtung nach einem der vorhergehenden Ansprüche, bei der der begrenzte Durchgang mindestens eine Öffnung (10) im oberen Teil (9) des Gehäuses umfaßt.

11. Vorrichtung nach einem der vorhergehenden Ansprüche, bei der der begrenzte Durchgang mindestens eine Öffnung (58) in der Hauptventilbaugruppe umfaßt.

12. Vorrichtung nach einem der vorhergehenden Ansprüche, bei der eine biegsame Trennwand (8) die Hauptventilbaugruppe (20) und das Gehäuse (4, 9) miteinander verbindet, um einen Teil des Bodens der oberen Kammer (26) zu bilden.

13. Vorrichtung nach Anspruch 12, bei der der begrenzte Durchgang mindestens eine Öffnung (50) in der Trennwand (8) umfaßt.

14. Vorrichtung nach einem der Ansprüche 1 bis 11, bei der die Hauptventilbaugruppe (20) einen Kolben bildet, der eng mit der Innenwand des Gehäuses (4, 9) zusammenarbeitet.

15. Vorrichtung nach einem der vorhergehenden Ansprüche, bei der die Hauptventilbaugruppe (20) dichter ist als die Flüssigkeit, in der sie getaucht werden soll und daher infolge der Schwerkraft aufliegen wird.

16. Vorrichtung nach einem der vorhergehenden Ansprüche, bei der eine Feder (75) zwischen dem Gehäuse (4, 9) und der Hauptventilbaugruppe (20) wirkt, um deren Aufliegen zu unterstützen.

17. Vorrichtung nach einem der vorhergehenden Ansprüche, bei der die Konturen der Unterseite der Hauptventilbaugruppe (20), des unteren Teils des Gehäuses (4) und der Austrittsöffnung (5) den Flüssigkeitsstrom leiten, wenn die Baugruppe (20) erst einmal von der Auflagefläche entfernt wurde, um das Anheben jener Baugruppe (20) zu unterstützen.

18. Vorrichtung nach Anspruch 2 und einem der vorhergehenden Ansprüche, bei der die Konturen der Unterseite der Hauptventilbaugruppe (20), des unteren Teils des Gehäuses (4) und der Austrittsöffnung (5) den Flüssigkeitsstrom leiten, wenn die Baugruppe (20) erst einmal von der Auflagefläche entfernt wurde, um einen fortschreitenden Druckabfall in der Flüssigkeit zu erzeugen, und bei der eine Verbindung zwischen der oberen Kammer und einer so gebildeten Niederdruckzone vorhanden ist, wodurch die Flüssigkeit in die obere Kammer gespült und mit dem Hauptstrom abgelassen wird.

19. Vorrichtung nach Anspruch 18 als Anhang zum Anspruch 2, bei der die Verbindung mit der Niederdruckzone über den Durchgang (22) erfolgt.

20. Vorrichtung nach Anspruch 18 als Anhang zum Anspruch 11, bei der die Verbindung mit der Niederdruckzone über die Öffnung (58) erfolgt.

## Revendications

1. Dispositif à soupape de décharge destiné à une immersion totale dans un fluide, le dispositif comprenant un boîtier (4, 9), un assemblage de soupape principal pouvant être déplacé vers le haut (20) dans le boîtier et formant avec la partie supérieure (9) de celui-ci une chambre supérieure à volume variable (26), une passage restreint (10, 49, 58, 88) entre la chambre supérieure (26) et l'extérieur de celle-ci, une sortie (5) menant vers le bas à partir de la partie inférieure (4) du boîtier, un siège (6) pour l'assemblage de soupape principal au niveau de l'entrée de la sortie (5), de sorte que dans la position abaissée de l'assemblage de soupape principal, la sortie est normalement bloquée contre l'entrée de fluide dans lequel le dispositif est immergé, et une soupape pilote (12, 30, 36) pouvant être actionnée en un point éloigné du boîtier (4, 9) pour mettre la chambre supérieure (26) en communication libre avec la sortie (5), l'agencement étant tel que lors de l'établissement d'une telle communication libre, le fluide s'échappe de la chambre supérieure (26), le changement dans les pressions relatives au-dessus et au-dessous de l'assemblage de soupape principal (20) entraînant le délogement (l'ouverture) de ce dernier, permettant ainsi l'écoulement du fluide d'immersion dans la sortie et sa décharge pratiquement complète, de façon que l'arrêt de l'écoulement du fluide d'immersion permet le retour de l'assemblage de soupape principal (20) vers sa position de siège (fermée), la soupape pilote (12, 36) coupant ladite communication libre, et de façon que lors du remplissage, le fluide d'immersion pénètre dans la chambre supérieure (26) à travers ledit passage restreint (10, 49, 58, 88) pour établir une pression nette vers le bas sur l'assemblage de soupape principal et donc pour le maintenir ainsi dans sa position fermée.

2. Dispositif selon la revendication 1, dans lequel ladite communication libre se fait par l'intermédiaire d'un passage (22) traversant l'assemblage de soupape principal (20).

3. Dispositif selon la revendication 2, dans lequel la soupape pilote comporte un élément (25, 31), coopérant avec ledit passage (22) pour l'ouvrir ou le fermer lors du déplacement dudit élément.

4. Dispositif selon la revendication 3, dans lequel ledit élément de soupape pilote (25) est déplacé vers le bas pour ouvrir ledit passage (22).

5. Dispositif selon la revendication 3, dans lequel ledit élément de soupape pilote (31) est déplacé vers le haut pour ouvrir ledit passage.

6. Dispositif selon la revendication 3, dans lequel ledit élément de soupape pilote (31) ouvre ledit passage (22) lors de son déplacement vers le haut ou vers le bas.

7. Dispositif selon les revendications 5 ou 6, pour un liquide, dans lequel un moyen de commande dudit élément de soupape pilote supporte un butoir (57) et un flotteur (56) guidé de façon captive pour s'engager dans le butoir et actionner la soupape pilote lorsque le niveau du liquide dépasse une limite prédéterminée.

8. Dispositif selon la revendication 1, dans lequel la soupape pilote (36) contrôle un passage (41, 35, 40, 42) à travers le boîtier, de la chambre supérieure (26) vers la sortie (5).

9. Dispositif selon la revendication 8, dans lequel l'assemblage de soupape principal (20) supporte une soupape secondaire (30), contactant une butée (34), lors du soulèvement de l'assemblage de soupape principal, entraînant l'ouverture de la soupape secondaire (30), et établissant ainsi entre la chambre supérieure (26) et la sortie (5) une communication plus directe que le passage de la soupape pilote.

10. Dispositif selon l'une quelconque des revendications précédentes, dans lequel le passage restreint englobe au moins une ouverture (10) dans la partie supérieure (9) du boîtier.

11. Dispositif selon l'une quelconque des revendications précédentes, dans lequel le passage restreint englobe au moins un orifice (58) dans l'assemblage de soupape principal.

12. Dispositif selon l'une quelconque des revendications précédentes, dans lequel une membrane flexible (8) assure la connexion entre l'assemblage de soupape principal (20) et le boîtier (4, 9), pour former une partie du fond de la chambre supérieure (26).

13. Dispositif selon la revendication 12, dans lequel le passage restreint englobe au moins un orifice (50) dans la membrane (8).

14. Dispositif selon l'une quelconque des revendications 1 à 11, dans lequel l'assemblage de soupape principal (20) forme un piston coopérant étroitement avec la paroi interne du boîtier (4, 9).

15. Dispositif selon l'une quelconque des revendications précédentes, dans lequel l'assemblage de soupape principal (20) est plus dense que le fluide dans lequel il doit être immergé, entraînant ainsi sa fermeture par gravité.

16. Dispositif selon l'une quelconque des revendications précédentes, dans lequel un ressort (75) agit entre le boîtier (4, 9) et l'assemblage de soupape principal (20) pour faciliter sa fermeture.

17. Dispositif selon l'une quelconque des revendications précédentes, dans lequel les contours du côté inférieur de l'assemblage de soupape principal (20), la partie inférieure du boîtier (4) et la sortie (5) canalisent l'écoulement du liquide après l'ouverture de l'assemblage (20), pour faciliter le soulèvement de cet assemblage (20).

18. Dispositif selon la revendication 2 et selon l'une quelconque des revendications précédentes, dans lequel les contours du côté inférieur de l'assemblage de soupape principal (20), la partie inférieure du boîtier (4) et la sortie (5) canalisent l'écoulement du liquide après l'ouverture de l'assemblage (20), pour entraîner une chute de pression progressive dans le liquide, une communication étant établie entre la chambre supérieure et une zone basse pression ainsi créée, le liquide dans la chambre supérieure étant ainsi évacué et déchargé avec l'écoulement principal.

19. Dispositif selon la revendication 18, dépendant de la revendication 2, dans lequel la communication avec la zone basse pression se fait par l'intermédiaire dudit passage (22).

20. Dispositif selon la revendication 18, dépendant de la revendication 11, dans lequel la communication avec la zone basse pression se fait par l'intermédiaire dudit orifice (58).
